# EUROPEAN PATENT SPECIFICATION

(11) **EP 0 980 735 B1**
(45) Date of publication and mention of the grant of the patent: **17.10.2007**
(21) Application number: 99116293.4
(22) Date of filing: 18.08.1999
(51) Int. Cl.: B23H 5/04, B24B 53/00, B24B 53/053, B24D 5/02

(54) **Micro-discharge truing device and fine machining method using the device**
Micro-Entladungsabrichtvorrichtung und Feinbearbeitungsverfahren unter Verwendung dieser Vorrichtung
Dispositif de dressage par micro-décharges et méthode d'usinage de précision utilisant le dispositif

(30) Priority: 19.08.1998 JP 23252098
(43) Date of publication of application: 23.02.2000
(73) Proprietor: RIKEN, Wako-shi, Saitama 351-0198 (JP)
(72) Inventor: Ohmori, Hitoshi, Wako-shi, Saitama 351-0198 (JP); Yamagata, Yutaka, Wako-shi, Saitama 351-0198 (JP)
(74) Representative: Grünecker, Kinkeldey, Stockmair & Schwanhäusser Anwaltssozietät

(56) References cited:
- US-A- 3 893 013
- US-A- 5 639 363
- PATENT ABSTRACTS OF JAPAN vol. 018, no. 396 (M-1644), 25 July 1994 (1994-07-25) & JP 06 114732 A (NACHI FUJIKOSHI CORP), 26 April 1994 (1994-04-26) & DATABASE WPI Week 199720 Derwent Publications Ltd., London, GB; AN 1997-215835 & JP 06 114732 A (FUJIKOSHI KK), 16 April 1997 (1997-04-16)
- PATENT ABSTRACTS OF JAPAN vol. 1998, no. 11, 30 September 1998 (1998-09-30) & JP 10 175165 A (KOYO MACH IND CO LTD), 30 June 1998 (1998-06-30) & DATABASE WPI Section PQ, Week 199836 Derwent Publications Ltd., London, GB; Class P61, AN 1998-421694 & JP 10 175165 A (KOYO KIKAI KK), 30 June 1998 (1998-06-30)
- PATENT ABSTRACTS OF JAPAN vol. 1998, no. 08, 30 June 1998 (1998-06-30) & JP 10 076448 A (RIKEN SEIKO KK), 24 March 1998 (1998-03-24)

## Description

### BACKGROUND OF THE INVENTION

### FIELD OF THE INVENTION

The present invention relates to a micro-discharge truing device, according to the preamble portion of claim 1, for truing a very fine or thin electrically conductive grindstone and a fine machining method using the device. A micro-discharge truing device of the above type is disclosed in Patent Abstracts of Japan JP 06114732.

### DESCRIPTION OF THE RELATED ART

Recently, for development of a micro-machine and the like, there have been demands for a machining technique to machine constituting fine components with high precision. As a machining method suitable particularly for making holes or channels in such fine components, an electrolytic in-process dressing grinding method (hereinafter referred to as ELID grinding method) has been noted.

In the electrolytic in-process dressing grinding method (ELID grinding method), a very fine electrically conductive grindstone using fine diamond grains, or a very thin electrically conductive grindstone is used, and the grindstone is electrolytically dressed to machine an article to be machined (workpiece). The method is characterized in that machining precision is high, high-quality surface roughness is obtained, and hard three-dimensional shaped components are relatively easily machined.

Even a very fine/thin grindstone to be applied to fine machining surely has an offset or a deflection during processing. Therefore, such offset or deflection needs to be removed by truing prior to application to a precision machining like ELID grinding machining.

However, in a metal bond grindstone for use in the ELID grinding machining, a bond material is very hard. Therefore in a conventional truing method, a correction efficiency is low, a correction precision is limited, and the application is difficult. Specifically, since the grindstone to be applied to the fine machining is very fine or thin (e.g., a diameter of 1 mm or less, thickness of 1 mm or less), by contact with a tool for mechanical truing, the grindstone itself is deformed, which causes a problem that a high-precision truing cannot be realized.

On the other hand, as a machining method of machining a workpiece with no contact therewith, electric discharge machining is known. In the machining method, the workpiece and a machining electrode are opposed to each other with a gap therebetween in an insulating machining liquid, and a short-time pulse arc discharge is repeated, to perform removal machining.

In the machining method, however, there are problems that (1) a shape of the electrode needs to be conformed beforehand to a desired machining shape, (2) precise position control is necessary to keep a constant interval between the electrode and the workpiece, (3) a large current pulse needs to be supplied between the electrode and the workpiece, and a large complicated power equipment is necessary, and (4) since the electrode shape is changed by consumption of the electrode, the electrode needs to be frequently replaced.

### SUMMARY OF THE INVENTION

The present invention has been developed to solve the above-mentioned various problems. Specifically, an object of the present invention is to provide a micro-discharge truing device and a fine machining method using the device in which an offset or a deflection of a very fine/thin grindstone can efficiently be removed, a high-precision truing can be performed without deforming the grindstone itself, a power equipment with small size and output is sufficient, neither complicated control circuit nor control apparatus is necessary and electrodes and other consumables are easily manufactured/reprocessed.

Inventors et al. of the present invention have noticed that when a disc-shaped electrode is rotated to generate fine sparks (micro-discharge) between an outer peripheral edge of the electrode and a grindstone, not only a non-contact efficient high-precision truing but also reduction of a power equipment in size and output can be realized, and that a shape change by consumption of the electrode can remarkably be reduced. In other words, when an electric conductivity of a metal bond grindstone for use in ELID grinding machining is used, by a micro-discharge phenomenon in a fine gap between the grindstone and the electrode, a metal bonded portion is molten/removed with no contact therewith and with high precision, so that a grindstone surface can be corrected to a desired shape. The present invention is based on such inventive finding.

Specifically, according to the present invention, there is provided the micro-discharge truing device according to claim 1.

According to the above-mentioned constitution of the present invention, by stably generating the sparks (micro-discharge) by the voltage applying unit (20) between the outer peripheral edge of the rotating disc-shaped discharge electrode (14) and the machining surface (12a) of the electrically conductive grindstone (12) whose position is controlled by the position controller (18), the metal bonded portion of the electrically conductive grindstone is molten/removed with no contact therewith and with high efficiency and precision, and the grindstone surface can be corrected to the desired shape.

Moreover, since the discharge electrode (14) is rotated around the axial center Z by the electrode rotating unit (16), even the electrode worn by the micro-discharge can maintain roundness, and can be used continuously for a long time.

Furthermore, since the alkaline liquid is supplied between the grindstone and the electrode by the machining liquid supply unit (22), as compared with a dry state or a case where an insulating liquid is supplied, a lower voltage, higher current micro-discharge can stably be generated, and the power equipment can be reduced in size and output.

The voltage applying unit (20) comprises a direct-current power supply (24) for generating a predetermined direct-current voltage; a pulse discharge circuit (25) having a capacitor C, a resistance R, and a pair of output terminals to charge the capacitor when the terminals are open therebetween and to discharge electricity from the capacitor when a resistance between the terminals is reduced; and a current supply line (26) for connecting a plus side of the output terminal to the grindstone and connecting a minus side to the electrode.

In the constitution, the capacitor C is charged via the resistance R with a direct-current power, and the voltage is raised to a constant voltage between capacitor poles (between the output terminals). Additionally, when the electrode and the grindstone come close to each other to reduce the resistance therebetween, there arises dielectric breakdown of medium (alkaline liquid) between the electrode and the grindstone, and a discharge state is brought about. When discharge starts, energy in the capacitor is discharged, insulation properties of the medium are restored, and a charge state is returned. When the frequency of such cycle is increased, an excellent micro-discharge truing can be realized. Therefore, by the constitution, as compared with the conventional discharge machining, the power equipment can largely be reduced in size and output, thereby obviating the necessity of a complicated control circuit or control apparatus.

Moreover, according to the present invention, there is provided a fine machining method using the micro-discharge truing device according to the invention, the method comprising: (A) a micro-discharge truing process provided with a disc-shaped discharge electrode (14) having an outer peripheral edge (14a) which can be disposed in the vicinity of a machining surface (12a) of an electrically conductive grindstone (12), and an electrode rotating unit (16) for rotating the discharge electrode around an axial center Z, a machining liquid supply unit (22) for supplying an alkaline liquid between the grindstone and the electrode, and simultaneously applying a direct-current voltage between the electrically conductive grindstone and the discharge electrode in a pulse manner to shape the machining surface by discharge; (B) an electrolytic dressing process provided with a dressing electrode (28) having opposite surfaces (28a) distant from the machining surfaces of the electrically conductive grindstone (12) while supplying the alkaline liquid between the grindstone and the dressing electrode and simultaneously applying the direct-current voltage between the electrically conductive grindstone and the dressing electrode to dress the electrically conductive grindstone by electrolyte; and (C) a grinding process of machining a workpiece with the electrically conductive grindstone.

According to the method, the very fine or thin electrically conductive grindstone from which the offset or the deflection is removed by the micro-discharge truing process (A) is used, and the electrolytic dressing process (B) and the grinding process (C) can be performed simultaneously or repeatedly. By eliminating an adverse effect of the offset or the deflection, a micro-machine or another fine component can efficiently be machined with high precision.

Other objects and advantageous characteristics of the present invention will be apparent from the following description with reference to the accompanying drawings.

### BRIEF DESCRIPTION OF THE DRAWINGS

Fig. 1 is an entire constitutional view of a micro-discharge truing device according to the present invention.
Fig. 2 is a circuit diagram of pulse discharge of Fig. 1.
Fig. 3 illustrates an embodiment showing voltage and current changes in discharge truing.
Fig. 4 illustrates the embodiment showing a relationship of a truing time and a residual deflection.
Fig. 5 illustrates the embodiment showing a relationship of an input voltage and a maximum gap.
Figs. 6A to 6C are process explanatory views showing a fine machining method according to the present invention.
Fig. 7 illustrates an embodiment showing a change of operating voltage in initial electrolytic dressing.

### DETAILED DESCRIPTION OF THE PREFERRED EMBODIMENTS

Preferred embodiments of the present invention will be described hereinafter with reference to the drawings. Additionally, common portions in the drawings are denoted with the same reference numerals, and redundant description is omitted.

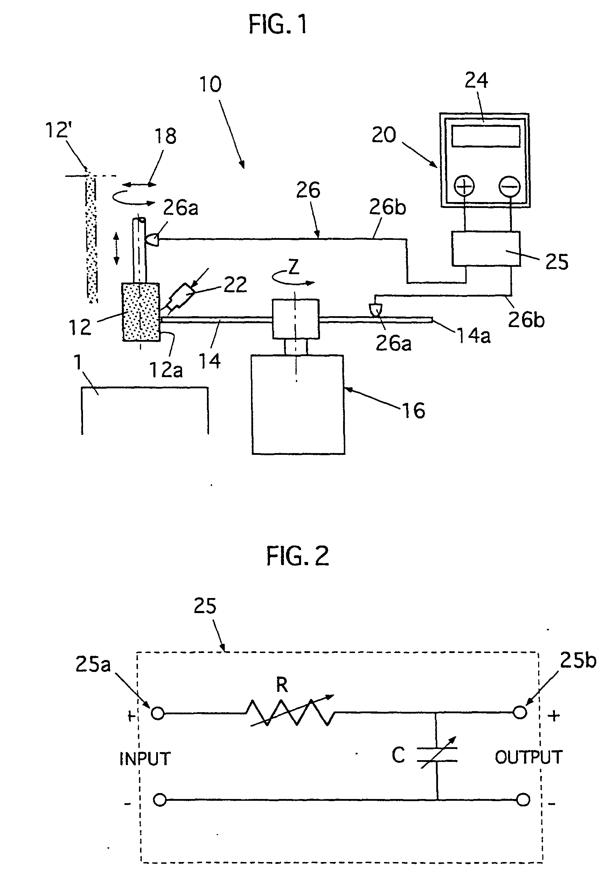

Fig. 1 is an entire constitutional view of a micro-discharge truing device according to the present invention. As shown in the drawing, a micro-discharge truing device 10 comprises an electrically conductive grindstone 12, a disc-shaped discharge electrode 14, an electrode rotating unit 16, a position controller 18, a voltage applying unit 20, and a machining liquid supply unit 22.

In the embodiment, the electrically conductive grindstone 12 is a very fine metal bond grindstone using fine diamond grains, and is moved vertically in the drawing to process holes in a workpiece 1. Moreover, the electrically conductive grindstone 12 is rotated/driven around its axial center, and the position controller 18 controls a relative position of an outer peripheral edge 14a of the electrode 14 and the grindstone 12.

Additionally, a diameter of the very fine metal bond grindstone is arbitrary, and may be, for example, 1 mm or less. Moreover, the electrically conductive grindstone may be a very thin metal bond grindstone 12'. In this case, as shown by a two-dot chain line in Fig. 1, the grindstone 12' is rotated/driven around a horizontal axial center.

The disc-shaped discharge electrode 14 has the outer peripheral edge 14a which can come close to a machining surface 12a of the electrically conductive electrode 12. The outer peripheral edge 14a of the discharge electrode 14 is formed in a complete round centering on its axial center Z. A thickness of the discharge electrode 14 is preferably as thin as possible so as to obtain a stable micro-discharge, as long as roundness can be held, and may be, for example, 2 mm or less.

The discharge electrode 14 is attached to a rotating shaft of the electrode rotating unit 16 (e.g., electric motor), and rotated/driven around its axial center Z.

The voltage applying unit 20 comprises a direct-current power supply 24, a pulse discharge circuit 25, and a current supply line 26. The direct-current power supply 24 generates a predetermined direct-current voltage (e.g. from DC103V to 110V), and applies the voltage to an input terminal of the pulse discharge circuit 25. Moreover, the current supply line 26 comprises a brush 26a (power feeder) which slides on and simultaneously contacts a rotating shaft of the grindstone 12 and a surface of the discharge electrode 14, and a connecting line 26b for electrically interconnecting the brush 26a and an output terminal of the pulse discharge circuit 25, so that a plus side of the output terminal is connected to the grindstone, and a minus side is connected to the electrode.

The machining liquid supply unit 22 supplies an alkaline liquid between the grindstone 12 and the electrode 14. The alkaline liquid is, for example, a water-soluble grinding liquid for use in ELID grinding, is not a completely insulating liquid, and has a certain degree of electric conductivity (e.g., 1300 to 1800 µS/cm). Additionally, the liquid may have a function of reducing an electric resistance between the grindstone 12 and the electrode 14.

Fig. 2 is a circuit diagram of pulse discharge of Fig. 1. As shown in the drawing, the pulse discharge circuit 25 has a variable resistance R positioned between input and output terminals 25a, 25b on the plus side, and a variable capacitor C positioned between plus and minus of the output terminal 25b. According to the constitution, when the terminals of the output terminal 25b are open therebetween in a simple circuit, the capacitor C is charged. When a resistance between the terminals of the output terminal 25b is reduced, electricity is discharged from the capacitor C. Thereby, the predetermined voltage can be applied between the grindstone 12 and the electrode 14 in a pulse manner.

According to the constitution of the micro-discharge truing device 10 shown in Fig. 1, the discharge electrode 14 is rotated at a constant peripheral speed, and the grindstone 12 is also rotated at a constant peripheral speed. Additionally, the grindstone 12 is reciprocated in an axial direction by the position controller 18, and is simultaneously fed in a diametrical direction at a predetermined speed. Moreover, a constant gap is maintained between the grindstone 12 and the electrode 14, and a small amount of grinding liquid (alkaline liquid) is supplied, so that stable discharge sparks are generated to perform micro-discharge truing.

According to the above-mentioned constitution of the present invention, since the spark (micro-discharge) is stably generated by the voltage applying unit 20 between the outer peripheral edge 14a of the rotating discharge electrode 14 and the machining surface 12a of the electrically conductive grindstone 12 with its position controlled by the position controller 18, a metal bonded portion of the electrically conductive grindstone 12 is molten/removed with no contact therewith and with high efficiency and precision, and the grindstone surface can be corrected to the desired shape.

Moreover, since the discharge electrode 14 is rotated around the axial center Z by the electrode rotating unit 16, even the electrode worn by the micro-discharge can maintain roundness, and can be used continuously for a long time.

Furthermore, since the alkaline liquid is supplied between the grindstone and the electrode by the machining liquid supply unit 22, as compared with a dry state or a case where an insulating liquid is supplied, a lower voltage, higher current micro-discharge can stably be generated, and the power equipment can be reduced in size and output.

### [Embodiment 1]

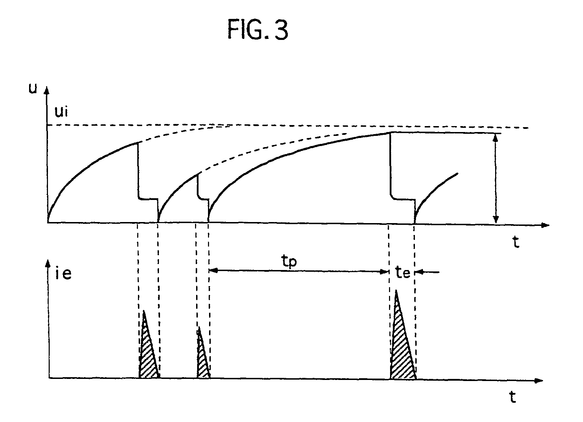

Figs. 3 to 5 show an embodiment in which the aforementioned micro-discharge truing device 10 is used, and Fig. 3 shows voltage and current changes in discharge truing.

As shown in the drawing, the pulse discharge circuit 25 is a simple circuit comprising a single capacitor C and a resistance R, but the capacitor C is charged via the resistance R with a direct-current power, and the voltage is raised to a constant voltage between capacitor poles (between the output terminals). Additionally, when the electrode and the grindstone come close to each other to reduce the resistance therebetween, there arises dielectric breakdown of medium (alkaline liquid) between the electrode and the grindstone, and a discharge state is brought about. When discharge starts, energy in the capacitor is discharged, insulation properties of the medium are restored, and a charge state is returned. When the frequency of such cycle is increased, an excellent micro-discharge truing can be realized. Therefore, by the constitution, as compared with the conventional discharge machining, the power equipment can remarkably be reduced in size and output, thereby obviating the necessity of a complicated control circuit or control apparatus.

### (Experiment Apparatus and Experiment Conditions)

In the above-mentioned micro-discharge truing device 10, a φ6 mm small-diameter metal bond grindstone for micro-grinding was used in the grindstone 12, and attached to a machining center so as to be automatically fed at a constant speed. Moreover, for precise micro-discharge, a circular plate of a φ100 mm × 2 mm thin copper was used as the discharge electrode 14. Individually for the discharge power supply 20 the aforementioned pulse discharge circuit 25 was manufactured by way of trial. For a stable micro-discharge, the power voltage was set in the range of 0 to 110V, the resistor R was set to 200Ω, and the capacitor C was set to 1 µF. As discharge medium, a small amount of water-soluble grinding liquid for electrolytic dressing was supplied between the electrode and the grindstone.

### (Experiment Results)

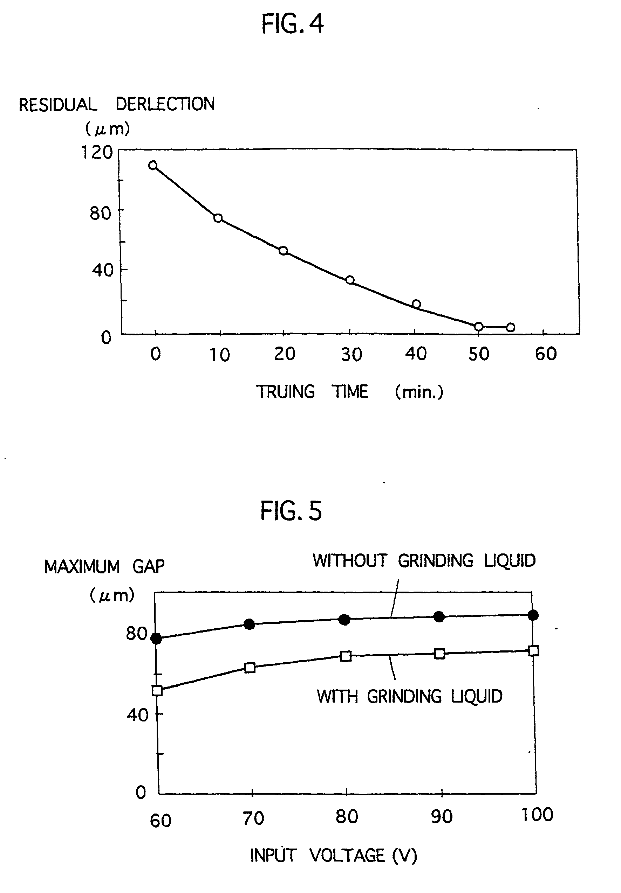

Fig. 4 shows a change of roundness of the grindstone by a discharge truing time. The roundness of a new grindstone 12 is about 110 µm/φ6 mm, and a correction efficiency becomes higher in 50 minutes. After 50 minutes elapse, the roundness change of the grindstone is moderated. With the truing time of 55 minutes, an excellent grindstone surface having a roundness of 2 µm/φ6 mm was obtained. This state is regarded as completion of the discharge truing.

### (Change of Discharge Truing State by Medium)

In the aforementioned discharge truing, it has been found that when the grinding liquid is supplied between the electrode and the grindstone, the property of the medium therebetween is changed and, therefore, a discharge truing state also changes. Specifically, when the grinding liquid is supplied, discharge sparks are also suppressed. Since the discharge energy can be concentrated in a small area, a truing precision of the grindstone can be enhanced.

Table 1 shows ranges of the current and voltage changes in the discharge truing. As shown in the table, when the grinding liquid is supplied, the insulation properties of the medium between the electrode and the grindstone are low, so that the voltage becomes lower, and the current becomes higher. However, since the voltage and current changes are small, and the discharge sparks are stabilized, it is found that a precise micro-truing can be performed.

**[Table 1]**

| | With Grinding liquid | Without Grinding liquid |
|---|---|---|
| Operating Current (A) | 0.4 to 0.5 | 0.1 to 0.3 |
| Operating Voltage (V) | 30 to 35 | 50 to 70 |

### (Relationship of Discharge Condition and Maximum Discharge Gap)

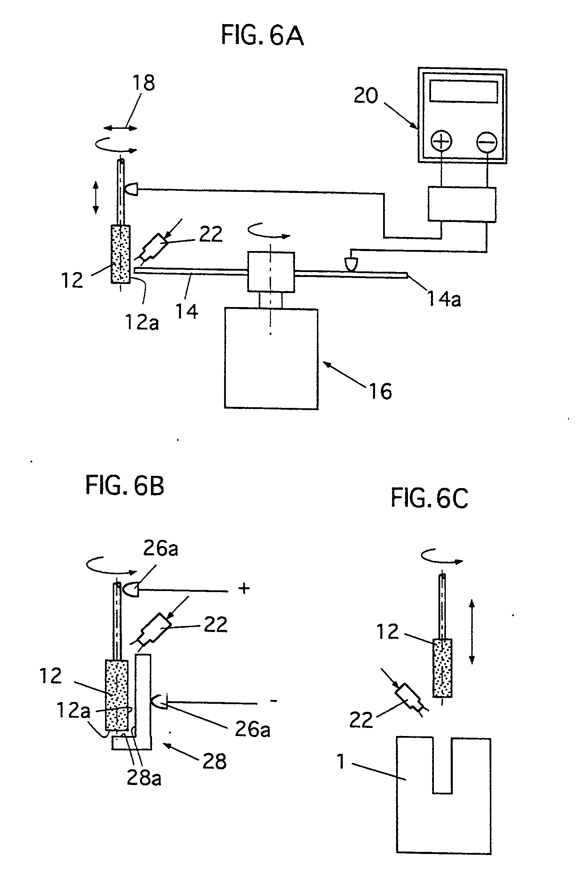

Fig. 5 shows a relationship of a voltage set in the discharge truing and a maximum gap. When no grinding liquid is supplied, the discharge is more easily caused. Therefore, it has been found that the maximum discharge gap is larger. When no grinding liquid is supplied and the maximum discharge gap is about 86 µm, or when the grinding liquid is supplied and the maximum discharge gap is about 68 µm, the maximum discharge gap by the voltage is not changed so much. This is considered as the maximum gap at which the discharge easily occurs in the discharge condition.

The following respects have been confirmed from the above-mentioned embodiment:
1. The pulse discharge circuit 25 comprising the single capacitor C and resistance R is a simple circuit, but by optimizing a resistance value and capacitor capacity, the micro-discharge truing can be realized.
2. When a small amount of the grinding liquid is supplied between the grindstone and the electrode, a stable micro-discharge truing can be realized, and the truing precision of the grindstone can be enhanced.
3. Dependent on the discharge condition, the maximum gap at which the discharge easily occurs is present.

Fig. 6 is a process explanatory view showing a fine machining method according to the present invention. As shown in the drawing, the fine machining method of the present invention comprises a micro-discharge truing process (A), an electrolytic dressing process (B), and a grinding process (C).

In the micro-discharge truing process (A), there are provided a disc-shaped discharge electrode 14 having an outer peripheral edge 14a which can come close to a machining surface 12a of an electrically conductive grindstone 12, and an electrode rotating unit 16 for rotating the discharge electrode 14 around an axial center Z. While an alkaline liquid is supplied between the grindstone 12 and the electrode 14, and a direct-current voltage is supplied between the electrically conductive grindstone 12 and the discharge electrode 14 in a pulse manner, the machining surface is shaped by discharge. Specifically, the process can be performed using the aforementioned micro-discharge truing device 10.

In the electrolytic dressing process (B), there is provided a dressing electrode 28 having opposite surfaces 28a distant from the machining surfaces 12a of the electrically conductive grindstone 12. While the alkaline liquid is supplied between the grindstone 12 and the dressing electrode 28, and the direct-current voltage is applied between the electrically conductive grindstone 12 and the dressing electrode 28, the electrically conductive grindstone is dressed by electrolyte. In the process, the voltage applying unit 20 and the machining liquid supply unit 22 of the above micro-discharge truing device 10 can be used. In this case, however, the pulse discharge circuit 25 is unnecessary, and a constant voltage is applied.

In the grinding process (C), a workpiece 1 is machined with the electrically conductive grindstone 12. For the machining, making of holes or channels in a fine component is preferable, but the present invention is not limited thereto, and can be applied to another fine machining.

According to the method, the very fine or thin electrically conductive grindstone from which the offset or the deflection is removed by the micro-discharge truing process (A) is used, and the electrolytic dressing process (B) and the grinding process (C) can be performed simultaneously or repeatedly. By eliminating an adverse effect of the offset or the deflection, a micro-machine or another fine component can efficiently be machined with high precision.

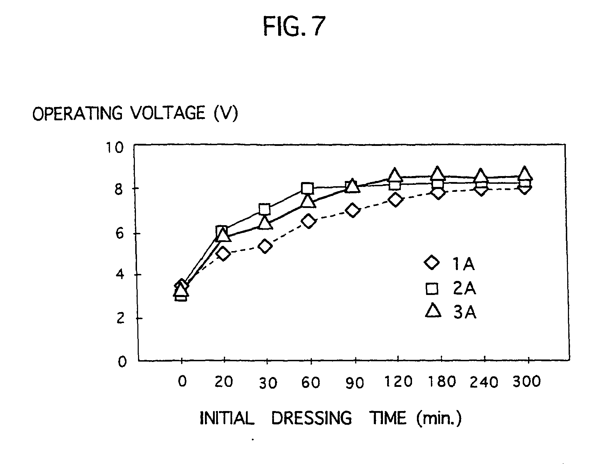

Fig. 7 illustrates an embodiment showing a change of the operating voltage in an initial electrolytic dressing. In the drawing, three lines show cases where peak currents are 1A, 2A, 3A, respectively.

From the drawing, it can be seen that change curves of the operating voltage slightly differ from one another due to differences of the peak current, but in any of the cases, the maximum operating voltage is substantially the same, and has a non-linear shape.

In the present invention, it has been confirmed that the micro-discharge truing is applied as electric truing means, the fine truing of the metal bond grindstone for use in the micro-grinding machining is precisely performed, and the machining precision necessary for ELID grinding can be secured.

Moreover, it has been found that by applying the above-mentioned micro-discharge truing, the following advantages are obtained.
1. The present invention can be applied to the truing of a metal bond, resin-metal compound bond or another electrically conductive bond grindstone.
2. Since the discharge truing method is a non-contact machining method, the precise truing of a small-diameter grindstone and a thin-blade grindstone can be performed.
3. An NC machine makes possible the micro-truing of a grindstone having a complicated surface shape.
4. By the discharge truing, the grindstone deflection can be removed, and additionally ultra-abrasive grains can also be protruded from the bonded portion. While the grindstone shape is maintained, the precise grinding machining of a complicated shape surface can be realized.

Therefore, according to the present invention, in the micro-discharge truing device and the fine machining method using the device, the offset or the deflection of the very fine/thin grindstone can efficiently be removed, a high-precision truing can be performed without deforming the grindstone itself, a power equipment with small size and output is sufficient, neither complicated control circuit nor control apparatus is necessary and electrodes and other consumables are easily manufactured/reprocessed. These and other effects are provided.

Additionally, although the present invention has been described by some preferable embodiments, it will be understood that the scope of right included in the invention is not limited by the embodiments. On the contrary, the scope of right of the present invention includes all of improvements, modifications, and equivalents included in the scope of the appended claims.

## Claims

1. A micro-discharge truing device (10), comprising: an electrically conductive grindstone (12) for machining a workpiece (1); a disc-shaped discharge electrode (14) having an outer peripheral edge (14a) which can be disposed in the vicinity of a machining surface (12a) of the electrically conductive grindstone(12); an electrode rotating unit (16) for rotating the discharge electrode (14) around an axial center (Z); a position controller (18) for controlling a relative position of the outer peripheral edge (14a) of the electrode (14) and the grindstone (12); a machining liquid supply unit (22) for supplying an alkaline liquid between the grindstone (12) and the electrode (14); and a voltage applying unit (20) for applying a predetermined voltage between the grindstone (12) and the electrode (14) in a pulse manner, wherein said voltage applying unit (20) comprises a direct-current power supply (24) for generating a predetermined direct-current voltage,
**characterised in that** the voltage applying unit (20) further comprises: a pulse discharge circuit (25) having a variable capacitor (C), a variable resistance (R), and a pair of input terminals (25a) to charge the variable capacitor (C) positioned between the plus and minus of the output terminals (25b) when the output terminals (25b) are open therebetween and to discharge electricity from the variable capacitor (C) when a resistance between the terminals (25b) is reduced; and a current supply line (26) for connecting a plus side of said output terminal (25b) to the grindstone (12) and connecting a minus side to the electrode (14).

2. A fine machining method to be carried out with the micro-discharged truing device (10) of claim 1, the method comprising:
(a) a micro-discharge truing process provided with a disc-shaped discharge electrode (14) having an outer peripheral edge (14a) which can be disposed in the vicinity of a machining surface (12a) of an electrically conductive grindstone (12), and an electrode rotating unit (16) for rotating the discharge electrode (14) around an axial center (Z), a machining liquid supply unit (22) for supplying an alkaline liquid between the grindstone (12) and the electrode(14), and simultaneously applying a direct-current voltage between the electrically conductive grindstone (12) and the discharge electrode (14) in a pulse manner to shape the machining surface (12a) by discharge;
(b) an electrolytic dressing process provided with a dressing electrode (28) having opposite surfaces (28a) distant from the machining surfaces (12a) of said electrically conductive grindstone (12) while supplying the alkaline liquid between the grindstone (12) and the dressing electrode (28) and simultaneously applying the direct-current voltage between the electrically conductive grindstone (12) and the dressing electrode (28) to dress the electrically conductive grindstone (12) by electrolyte; and
(c) a grinding process of machining a workpiece (1) with the electrically conductive grindstone (12).

## Patentansprüche

1. Mikroentladungs-Abrichtvorrichtung (10), aufweisend: einen elektrisch leitenden Schleifstein (12) zum abtragenden Bearbeiten eines Werkstückes (1); eine scheibenförmige Entladungselektrode (14) mit einer äußeren Umfangskante (14a), die in der Nähe einer Bearbeitungsoberfläche (12a) des elektrisch leitenden Schleifsteins (12) angeordnet werden kann; eine Elektroden- Dreheinheit (16) zum Rotieren der Entladungselektrode (14) rund um eine axiale Mitte (Z); eine Positionssteuerung (18) zum Steuern einer relativen Position der äußeren Umfangskante (14a) der Elektrode (14) und des Schleifsteins (12); eine Bearbeitungsflüssigkeitszuführeinheit zum Zuführen einer alkalischen Flüssigkeit zwischen den Schleifstein (12) und die Elektrode (14); und eine Spannungs- Anlageeinheit (20) zum Anlegen einer vorbestimmten Spannung zwischen dem Schleifstein (12) und der Elektrode (14) in einer pulsierenden Weise, wobei die Spannungs- Anlageeinheit (20) eine Gleichstrom- Energiezuführung (24) zum Erzeugen einer vorbestimmten Gleichstrom- Spannung aufweist,
**dadurch gekennzeichnet, dass** die Spannungs- Anlageeinheit (20) außerdem aufweist: eine Impulsentladungsschaltkreis (25) mit einem veränderbaren Kondensator (C), einen veränderbaren Widerstand (R) und ein Paar von Eingangsanschlüssen (25a), um den veränderbaren Kondensator (C) aufzuladen, positioniert zwischen dem Plus und dem Minus der Ausgangsanschlüsse (25b), wenn die Ausgangsanschlüsse (25b) dazwischen offen sind, und um Elektrizität von dem veränderbaren Kondensator (C) zu entladen, wenn ein Widerstand zwischen den Anschlüssen (25b) reduziert ist; und eine Stromzuführungsleitung (26) zum Verbinden einer Plusseite des Ausgangsanschlusses (25b) mit dem Schleifstein (12) und zum Verbinden einer Minusseite mit der Elektrode (14).

2. Feinbearbeitungsverfahren, das mit der Mikro- Entladungsabrichtvorrichtung (10) von Anspruch 1 ausgeführt werden soll, wobei das Verfahren aufweist:
(a) einen Mikroentladungs- Abrichtvorgang, vorgesehen mit einer scheibenförmigen Entladungselektrode (14) mit einer äußeren Umfangskante (14a), die in der Nähe einer Bearbeitungsoberfläche (12a) des elektrisch leitenden Schleifsteins (12) angeordnet werden kann; und eine Elektroden-Dreheinheit (16) zum Rotieren der Entladungselektrode (14) rund um eine axiale Mitte (Z), Bearbeitungsflüssigkeits- Zuführeinheit (22) zum Zuführen einer alkalischen Flüssigkeit zwischen den Schleifstein (12) und die Elektrode (14) und gleichzeitiges Anlegen einer Gleichspannung zwischen dem elektrisch leitfähigen Schleifstein (12) und der Elektrode (14) in einer pulsierenden Weise, um die abtragend zu bearbeitende Oberfläche (12a) durch Entladung zu formen;
(b) einen elektrolytischen Nachbearbeitungsvorgang, versehen mit einer Nachbearbeitungselektrode (28) mit gegenüberliegenden Oberflächen , die von den Bearbeitungsoberflächen (12a) des elektrisch leitenden Schleifsteins (12) während des Zuführens der alkalischen Flüssigkeit zwischen den Schleifstein (12) und der Nachbearbeitungselektrode (28) entfernt sind, und gleichzeitiges Anlegen der Gleichstrom- Spannung zwischen dem elektrisch leitenden Schleifstein (12) und der Nachbearbeitungselektrode (28), um den elektrisch leitenden Schleifstein (12) durch Elektrolyt nachzubearbeiten; und
(c) ein Schleifverfahren zum spanenden Bearbeiten eines Werkstückes (1) mit dem elektrisch leitenden Schleifstein (12).

## Revendications

1. Dispositif de dressage par micro-décharges (10) comprenant: une meule électroconductrice (12) pour usiner une pièce à usiner (1) ; une électrode à décharge (14) en forme de disque ayant un bord périphérique extérieur (14a) pouvant être disposé à proximité d'une surface d'usinage (12a) de la meule électroconductrice (12) ; une unité de rotation d'électrode (16) pour faire tourner l'électrode à décharge (14) autour d'un centre axial (Z) ; un dispositif de commande de position (18) pour commander la position relative du bord périphérique extérieur (14a) de l'électrode (14) et de la meule (12) ; une unité d'alimentation en liquide d'usinage (22) pour amener un liquide alcalin entre la meule (12) et l'électrode (14) ; et une unité d'application de tension (20) pour appliquer une tension prédéterminée entre la meule (12) et l'électrode (14) de façon pulsée, dans lequel ladite unité d'application de tension (20) comprend une alimentation en courant continu (24) pour générer une tension de courant continu prédéterminée,
**caractérisé en ce que** l'unité d'application de tension (20) comprend en outre : un circuit de décharge à pulsations (25) ayant un condensateur variable (C), une résistance variable (R) et une paire de bornes d'entrée (25a) pour charger le condensateur variable (C) positionné entre le plus et le moins des bornes de sortie (25b) lorsque les bornes de sortie (25b) sont ouvertes entre elles et pour décharger l'électricité provenant du condensateur variable (C) lorsque la résistance entre les bornes (25b) est réduite; et une ligne d'alimentation en courant (26) pour connecter un côté positif de ladite borne de sortie (25b) à la meule (12) et pour connecter un côté négatif à l'électrode (14).

2. Procédé d'usinage de précision à mettre en oeuvre avec le dispositif de dressage par micro-décharges (10) de la revendication 1, ledit procédé comprenant :
(a) un procédé de dressage par micro-décharges avec une électrode à décharge en forme de disque (14) ayant un bord périphérique extérieur (14a) pouvant être disposé à proximité d'une surface d'usinage (12a) d'une meule électroconductrice (12) et une unité de rotation d'électrode (16) pour faire tourner l'électrode à décharge (14) autour d'un centre axial (Z), une unité d'alimentation en liquide d'usinage (22) pour amener un liquide alcalin entre la meule (12) et l'électrode (14) et pour appliquer simultanément une tension de courant continu entre la meule électroconductrice (12) et l'électrode à décharge (14) de façon pulsée afin de former la surface d'usinage (12a) par décharge ;
(b) un procédé de dressage électrolytique muni d'une électrode de dressage (28) ayant des surfaces opposées (28a) distantes des surfaces d'usinage (12a) de ladite meule électroconductrice (12) lors de l'amenée du liquide alcalin entre la meule (12) et l'électrode de dressage (28) et de l'application simultanée de la tension de courant continu entre la meule électroconductrice (12) et l'électrode de dressage (28) afin de dresser la meule électroconductrice (12) par électrolyte ; et
(c) un procédé d'usinage par meulage d'une pièce à usiner (1) à l'aide de la meule électroconductrice (12).
